# EUROPÄISCHE PATENTSCHRIFT

(11) **EP 1 383 815 B1**
(45) Veröffentlichungstag und Bekanntmachung des Hinweises auf die Patenterteilung: **02.09.2009**
(21) Anmeldenummer: 01991819.2
(22) Anmeldetag: 11.12.2001
(51) Int. Cl.: C08G 18/08, C09D 175/04, C09D 133/04

(54) **METALLSALZ-FREIES FUSSBODENBESCHICHTUNGSMITTEL AUF POLYMERBASIS**
POLYMER-BASED FLOOR-COATING AGENT FREE OF METAL SALTS
PRODUIT DE REVETEMENT DE SOL EXEMPT DE SELS METALLIQUES, A BASE DE POLYMERE

(30) Priorität: 20.12.2000 DE 10063431
(43) Veröffentlichungstag der Anmeldung: 28.01.2004
(73) Patentinhaber: ECOLAB INC., St. Paul MN 55102-2233 (US)
(72) Erfinder: ROGMANN, Karl-Heinz, 40880 Ratingen (DE); SCHEUVENS, Ulrike, 40764 Langenfeld (DE); FAUBEL, Heiko, 42929 Wermelskirchen (DE)
(74) Vertreter: Godemeyer, Thomas
(86) Internationale Anmeldenummer: PCT/EP2001/014513
(87) Internationale Veröffentlichungsnummer: WO 2002/050149

(56) Entgegenhaltungen:
- EP-A- 0 438 216
- EP-A- 0 647 662
- EP-A- 0 709 414
- US-A- 4 622 360
- DATABASE WPI Section Ch, Week 198519 Derwent Publications Ltd., London, GB; Class A25, AN 1985-112782 XP002198091 & JP 60 053522 A (ITO SEIYU KK), 27. März 1985 (1985-03-27)

## Beschreibung

Die vorliegende Erfindung betrifft ein wäßriges, polymeres Fußbodenbeschichtungsmittel, das rezepturmäßig keine Metallsalze beinhaltet, enthaltend eine spezielle Polyurethan-Komponente sowie ein Emulsionspolymer als filmbildende Komponente, die bewirkt, daß eine resultierende Beschichtung durch Einsatz einer Säure oder Lauge abziehbar bzw. entfernbar ist. Außerdem betrifft die vorliegende Erfindung die Verwendung der genannten speziellen Polyurethan-Komponente zur Verbesserung des Strapazierverhaltens und/oder der Haltbarkeit von Fußbodenbeschichtungen.

Neue, bisher unbehandelte Fußböden und solche, die einer Grundreinigung unterzogen worden sind, werden heute zum Schutz vor Anschmutzungen und Beschädigungen ganz überwiegend mit Hilfe von speziellen Pflegeemulsionen behandelt. Diese Fußbodenbeschichtungsmittel, die in der Regel Wachs und/oder filmbildende Polymere in wechselnder Zusammensetzung enthalten, bilden auf den Fußböden nach dem Abtrocknen geschlossene Filme aus, die schmutzabweisend wirken. Dabei können Filme, die einen hohen Wachsanteil aufweisen, leicht zusätzlich poliert werden und sind bei Bedarf auch leicht wieder von den Oberflächen zu entfernen, während Filme, die überwiegend oder vollständig aus filmbildenden Polymeren bestehen, besonders widerstandsfähig gegen mechanische Beanspruchung sind. Die mechanische Widerstandsfähigkeit ist ein wichtiges Kriterium in der praktischen Anwendung.

Bei den zur Verbesserung der mechanischen Widerstandsfähigkeit eingesetzten Polymerverbindungen handelt es sich oft um solche, die in Wasser bei neutralem pH-Wert wenigstens teilweise unlöslich sind und die eine minimale Filmbildetemperatur im Bereich zwischen etwa 0 und etwa 90 °C aufweisen. Es handelt sich dabei vorzugsweise um Polymere, die aus ethylenisch ungesättigten Monomeren hergestellt werden. Beispiele derartiger Monomerer sind Styrol, Acrylsäureester oder Methacrylsäureester aliphatischer, 1 bis 8 C-Atome aufweisender Alkohole, Acrylnitril, Vinylacetat, Acrylsäure und Methacrylsäure. Besonders bevorzugt werden Poly(meth)acrylate aus zwei oder mehr dieser Monomeren, die gegebenenfalls in untergeordneter Menge auch weitere Monomere enthalten können. Ganz besonders bevorzugte Polymere enthalten 1 bis 30 Gew.-Teile an carbonsäuregruppenhaltigen Monomeren, 30 bis 70 Gew.-Teile Monomere, die Homopolymere mit Glastemperaturen um 20 °C bilden, vorzugsweise Ester der Acrylsäure mit C₁-C₈-Alkoholen und/oder der Methacrylsäure mit C₄-C₈-Alkoholen und 30 bis 70 Gew.-Teile Monomere, die Homopolymere mit Glastemperaturen über Raumtemperatur bilden, vorzugsweise Methacrylsäureester von C₁-C₃-Alkoholen oder Styrol. Werden in der Polymerdispersion mehrere unterschiedliche Polymerverbindungen der vorstehend genannten Art im Gemisch eingesetzt, soll die Filmbildetemperatur, die für das Gemisch ermittelt wird, im Bereich zwischen 0 und 70 °C liegen. Die genannten Filmbildungstemperaturen beziehen sich auf das weichmacherfreie System, d.h. auf die Polymeren ohne weitere Zusätze. Beispiele derartiger filmbildender Polymerer sind folgende, als Dispersionen angebotene Handelsprodukte: Licomer A 41^{®} (Firma Clariant), Neocryl A 349^{®} (Firma Avecia) Primal B 527^{®} (Firma Rohm und Haas).

Aufgrund der schweren Entfernbarkeit von Carboxylatgruppen enthaltenden Polymeren werden zur Lösung dieses Problems Schwermetallionen, beispielsweise Zinkionen, zugesetzt, die beim Eintrocknen zu besonders widerstandsfähigen Filmen führen. Beispiele von Polymerdispersionen des Handels, die Metallsalze enthalten, sind Ubatol DW 3081 (Firma Cray Valley), Neocryl SR 267^{®} (Firma Avecia), Primal B 1604^{®} (Firma Rohm und Haas). Metallvernetzte Polymer-Fußbodenbeschichtungen auf Basis derartiger Polymerdispersionen können bei Bedarf leicht entfernt werden.

Als ein weiterer Typ von filmbildenden Polymeren, die zusammen mit Poly(meth)acrylaten verwendet werden können, müssen Polyurethane erwähnt werden, die ebenfalls für diesen Zweck im Handel angeboten werden. Beispiele geigneter Polyurethandispersionen sind etwa Alberdingk U 210 W^{®} (Firma Alberdingk Boley) und Neorez 986^{®} (Firma Avecia).

Die Polymere sind vorzugsweise in Mengen zwischen 10 und 35 Gew.-%, insbesondere zwischen 11 und 20 Gew.-%, enthalten. Diese Zahlenangaben beziehen sich auf die reinen Polymere. Wird bei der Herstellung der Dispersionen bereits von dispergierten Polymeren ausgegangen, so wie sie vielfach im Handel angeboten werden, sind von diesen Dispersionen entsprechend höhere Mengen bei der Herstellung der Mittel zu verwenden. Polyurethane können in den Mitteln mit bis zu 15 Gew.-%, vorzugsweise mit 1 bis 8 Gew.-% vertreten sein.

Die Verwendung von metallhaltigen Polymeren bringt neben den Vorteilen der mechanischen Widerstandsfähigkeit und Wiederentfernbarkeit auch Probleme mit sich. Beispielsweise liegt in derartigen methallhaltigen Fußbodenbeschichtungsmitteln ein Überschuß an flüchtigen Aminen vor, die bewirken sollen, daß das jeweilige Metall, vorzugsweise Zink, vollständig chelatisiert ist und dadurch eine räumliche Vernetzung des Polymers vor der Applikation vermieden wird. Der hohe Anteil an flüchtigen Aminen geht einher mit Problemen bei der Handhabung und Anwendung aufgrund des Geruchs und der Toxizität der meisten flüchtigen Amine.

Hinzu kommt, daß aufgrund des Anteils von Übergangsmetallen und der damit verbundenen Umweltdiskussion, diese Art der Fußbodenbeschichtungsmittel ökologisch in Frage gestellt wird.

In dem europäischen Patent EP 438 216 A2 wird ein Beschichtungsmittel, das im wesentlichen frei von Metallsalzen ist, beschrieben, das leicht entfernbar ist. Dieses Beschichtungsmittel hat gemäß der EP 438 216 A2 nicht die ökologischen Probleme, die mit Metallen und flüchtigen Aminen in Verbindung gebracht werden. Im wesentlichen offenbart das EP 438 216 A2 eine Polymerzusammensetzung, die quellbare Emulsionspolymerpartikel enthält, die vor der Filmbildung in einem Ausmaß vernetzt sind, das es noch gestattet, daß die Polymeren bei der Anwendung einen Film bilden, der später bei Anwendung einer Lösung, die Quellmittel für die Polymerpartikel enthält, entfernbar ist. Das heißt, daß der gequollene Film im Fall der Wiederentfernung seinen Zusammenhalt verliert und deshalb leicht abgezogen werden kann. Wie sich jedoch bei der Betrachtung der Beispiele zu der vorliegenden Erfindung zeigt, haben Fußbodenbeschichtungen, die aus Mitteln basierend auf im wesentlichen metallfreien Polymeren gemäß der EP 438 216 A2 hergestellt wurden, Schwächen bei der mechanischen Widerstandsfähigkeit sowie bei der Haltbarkeit und Verschleißbeständigkeit des Films auf dem Boden. Diese Schwächen werden besonders deutlich, wenn man Formulierungen gemäß der EP 438 216 A2 im direkten Vergleich mit Formulierungen betrachtet, die auf Polymeren basieren, die im wesentlichen metallhaltig sind. Wie bekannt ist und sich auch aus den Beispielen ergibt, kann durch Zusatz von größeren Mengen Polyurethan, nämlich mehr als 10 Gew.-%, bezogen auf das gesamte Fußbodenbeschichtungsmittel, eine Verbesserung der mechanischen Widerstandsfähigkeit sowie der Verschleißanfälligkeit und Haltbarkeit von Fußbodenbeschichtungen auf Basis von metallvernetzten Polymeren erreicht werden. Bei derart hohen Mengen an Polyurethan muß allerdings eine Verschlechterung der Wiederentfernbarkeit in Kauf genommen werden. Wenn jedoch geringere Mengen an Polyurethan, beispielsweise 5 Gew.-%, bezogen auf das gesamte Fußbodenbeschichtungsmittel, eingesetzt werden, ist kaum Verbesserung bei den Kriterien der mechanischen Widerstandsfähigkeit bzw. des Verschleißes oder der Haltbarkeit zu erkennen. Die dargestellten Erkenntnisse beruhen auf Versuchen mit Polyurethan auf wäßrigpetrochemischer Basis, beispielsweise mit dem Produkt Neorez R 974.

Demzufolge stellte sich die vorliegende Erfindung die Aufgabe, Bodenbeschichtungsmittel, die rezepturgemäß frei von Metallen sind, zur Verfügung zu stellen, wobei die resultierende Fußbodenbeschichtung von hoher Qualität, insbesondere bezüglich der mechanischen Widerstandsfähigkeit, der Verschleißanfälligkeit und Haltbarkeit sowie der Wiederentfernbarkeit sein sollte. Überraschenderweise wurde festgestellt, daß durch Einsatz von bestimmten Polyurethankomponenten in einem rezepturgemäß frei von Metallsalzen formulierten polymeren Fußbodenbeschichtungsmittel die gewünschten Eigenschaften erreicht werden konnten. Dementsprechend ist ein Gegenstand der vorliegenden Erfindung ein wäßriges, polymeres Fußbodenbeschichtungsmittel, das rezepturgemäß frei von Metallsalzen ist, enthaltend
a) 1-10 Gew% Polyurethan-Komponente bezogen auf das gesamte Fußbodenbeschichtungsmittel, bei deren Herstellung eine Polyolmischung, in der als Bestandteil partiell dehydratisiertes Rizinusöl mit einer Hydroxylzahl von 90 bis 130 mg KOH pro g Substanz vorliegt, verwendet wurde, und
b) ein Emulsionspolymer als filmbildende Komponente, die bewirkt, daß eine resultierende Beschichtung durch Einsatz einer Säure oder Lauge abziehbar bzw. entfernbar ist, auf Basis von
   i) einem ersten Anteil an polymerisierten Einheiten, die entweder eine Säure- oder eine Aminogruppe enthalten, mit der Wirkung, daß die Teilchen des Emulsionspolymers quellen, wenn sie mit einem Amingruppen-enthaltenden Politurentferner (einschließlich Ammoniak) bzw. einem sauren Politurentferner behandelt werden, und
   ii) einem zweiten Anteil an polymerisierten Einheiten, welche eine funktionelle Gruppe enthalten, die eine zwischenmolekulare, kovalente Vernetzung des Polymers ermöglicht, entweder durch direkte Reaktion zwischen diesen vernetzenden Gruppen oder mittels eines kovalent vernetzenden Mittels, welches mit diesen vernetzenden Gruppen reagieren kann und in der Zusammensetzung vorliegt, wobei eine solche zwischenmolekulare kovalente Vernetzung des Polymers entweder vor oder während der Abscheidung des Films auf dem Substrat stattfindet.

Unter Politurentferner versteht der Fachmann einen Grundreiniger, der zur Entfernung von Beschichtungen herangezogen wird.
Wie einleitend bereits dargelegt wurde, ist das Emulsionspolymer b) bereits aus der EP 438 216 A2 bekannt. Die Polyurethan-Komponente a) ist in der DE 44 38 351 A1 offenbart.

Nirgends aus der EP 438 216 A2 oder der DE 44 38 351 A1 kann jedoch entnommen oder vermutet werden, daß durch Kombination der genannten Komponenten ein Mittel verfügbar gemacht werden könnte, das hinsichtlich der mechanischen Widerstandsfähigkeit, der Verschleißanfälligkeit und Haltbarkeit und auch Wiederentfernbarkeit der resultierenden Bodenbeschichtung derart gute Ergebnisse erreicht würde. Dies war völlig überraschend und unerwartet. Zur Bestimmung der Hydroxylzahl des Rizinusöls wird das Rizinusöl im allgemeinen mit Essigsäureanhydrid-Pyridin gekocht und die entstehende Säure mit KOH-Lösung titriert. Genauere Beschreibungen finden sich beispielsweise in verschiedenen Normen wie DIN 53 240 (12/1971), DIN ISO 4629 (11/1979).

Vorzugsweise wird bei der Herstellung des in dem erfindungsgemäßen enthaltenen Polyurethans a) partiell dehydratisiertes Rizinusöl mit einer Hydroxylzahl von 110 bis 125 mg KOH pro g Substanz eingesetzt.

Dabei ist es ebenfalls bevorzugt, daß bei der Herstellung des Polyurethans a) das partiell dehydratisierte Rizinusöl einen Anteil von 25 bis 100 Gew.-%, bezogen auf die Polyolkomponente des Polyurethans, ausmacht. Dabei ist das partiell dehydratisierte Rizinusöl vorzugsweise Bestandteil einer Mischung mit einem Polyesterpolyol, einem Polyetherpolyol, einem Polyester-Polyether-Polyol oder einher Mischung aus einem Polyester-Polyol und Polyether-Polyol, wobei das Molekulargewicht des Polyols im Bereich von etwa 400 bis 6000, besonders bevorzugt bei etwa 1000 bis 3000 und bei Polyetherpolyolen bei etwa 1000 bis 2000 liegt.

Vorzugsweise macht in dem erfindungsgemäßen Mittel das Polyurethan a) 1 bis 7 Gew.-%, insbesondere 1 bis 5 Gew.-%, bezogen auf das gesamte Fußbodenbeschichtungsmittel, aus.

In einer weiteren bevorzugten Ausführungsform der vorliegenden Erfindung enthält das in dem erfindungsgemäßen Mittel enthaltene Emulsionspolymer b) 3 bis 35 Gew.-%, basierend auf dem Gesamtgewicht des Polymers, vorzugsweise 5 bis 30 Gew.-%, an festen polymerisierten Einheiten, welche eine Säuregruppe, vorzugsweise eine Carbonsäuregruppe, enthalten, mit der Wirkung, daß die Emulsionspolymerteilchen quellen, wenn sie mit einem Amingruppen-haltigen Politurentferner (einschließlich Ammoniak) behandelt werden, sowie zusätzlich 0,15 bis 12 Gew.-% an polymerisierten Einheiten, welche die vernetzende Funktionalität liefern.

Es ist außerdem bevorzugt, daß das in dem erfindungsgemäßen Mittel enthaltene Emulsionspolymer b) 3 bis 30 Gew.-%, bezogen auf das Gewicht des Polymers, vorzugsweise 5 bis 20 Gew.-% an polymerisierten Einheiten aufweist, welche eine primäre, sekundäre oder tertiäre Aminogruppe haben, mit der Wirkung, daß die resultierenden Emulsionspolymerteilchen quellen, wenn sie mit einem sauren Politurentferner behandelt werden, sowie zusätzlich 0,2 bis 9,0 Gew.-% an polymerisierten Einheiten, welche die vernetzende Funktionalität liefern, enthält.

Vorzugsweise macht die filmbildende Komponente b) 10 bis 40 Gew.%, besonders bevorzugt 12 bis 30 Gew.%, bezogen auf das gesamte Fußbodenbeschichtungsmittel, aus.

Es ist ebenfalls bevorzugt, wenn, bezogen auf das gesamte erfindungsgemäße Fußbodenbeschichtungsmittel, zusätzlich
a) bis zu 3 Gew.-% Wachsdispersion, vorzugsweise auf Polyethylenbasis, und/oder
b) bis zu 3 Gew.-% Verlaufshilfsmittel, vorzugsweise auf Basis nichtionischer Tenside, und/oder
weitere Hilfs- und Wirkstoffe, wie übliche temporäre Weichmacher, beispielsweise ein- oder mehrwertige Alkohole, übliche permanente Weichmacher, beispielsweise Tributoxyethylphosphat, weitere übliche Zusatzstoffe, beispielsweise Additive oder Konservierungsmittel sowie Wasser enthalten sind.

Weichmacher dienen zur Modifizierung der Filmkonsistenz, wobei man zwischen temporären Weichmachern und permanenten Weichmachern unterscheidet. Bei den temporären Weichmachern handelt es sich um flüchtige hydrophile Lösungsmittel, die das Zusammenlaufen der Polymerteilchen bei der Filmbildung begünstigen. Beispiele sind Ethylenglykol, Diethylenglykol sowie Glykol- und Polyglykolether. Ihr Anteil an den erfindungsgemäßen Mitteln liegt im allgemeinen nicht über 15 Gew.-%, vorzugsweise zwischen 0,5 und 10 Gew.-%. Permanente Weichmacher sind Flüssigkeiten, die unter Normalbedingungen nicht flüchtig sind, so daß mit deren Hilfe die Beschaffenheit des Pflegefilms anhaltend beeinflußt werden kann. Beispiele derartiger Weichmacher sind Dibutylphthalat, Tributylphosphat, Tributoxyethylphosphat und N-Methylcaprolactam. Auch dieser Weichmachertyp ist in den erfindungsgemäßen Suspensionen im allgemeinen zu nicht mehr als 15 Gew.-% enthalten. Bevorzugt wird ein Gehalt an 0,5 bis 10 Gew.-%.
Netz- und Verlaufshilfsmittel dienen dazu, die Benetzung der behandelten Oberfläche beim Auftrag der Selbstglanzemulsion zu verbessern; außerdem wird dadurch die Verdünnung der Mittel mit Wasser, beispielsweise beim Auftragen auf feuchte Fußböden, erleichtert. Verwendbar sind die üblichen Tenside, insbesondere nichtionische und anionische Tenside, beispielsweise Ethoxylate von langkettigen Alkoholen oder Alkylbenzolsulfonate und Fettalkoholsulfate. Der Gehalt an Netz- und Verlaufshilfsmitteln liegt im allgemeinen nicht über 5 Gew.-%, bezogen auf das Gesamtgewicht der Selbstglanzemulsion. Vorzugsweise liegt der Gehalt zwischen 0,1 und 2 Gew.-%. Auch mit Hilfe von Netzharzen kann die Benetzung der Oberfläche beim Auftrag verbessert werden. Bei diesen Harzen handelt es sich vorzugsweise um Styrol-Maleinatharze oder klargestellte Polyacrylate. Ihr Gehalt in den Mitteln liegt im allgemeinen nicht über 5 Gew.-%, vorzugsweise werden zwischen 0,1 und 2 Gew.-%.

Die Herstellung der Mittel kann nach üblichen Mischverfahren erfolgen. Im allgemeinen wird man von einer vorgefertigten Polymerdispersion, wie sie im Handel erhältlich ist, ausgehen oder eine Dispersion des Polymeren in an sich bekannter Weise in Wasser herstellen. Sofern die Selbstglanzemulsion auch Wachs enthalten soll, kann dieses zunächst getrennt zu einer Emulsion in Wasser, gegebenenfalls unter Zusatz geeigneter Wachsemulgatoren, verarbeitet und in dieser Form der Polymerdispersion zugesetzt werden. Unter Rühren können dann die übrigen Bestandteile in dieses Gemisch eingetragen werden. Der pH-Wert der Mittel wird gegebenenfalls mit Hilfe von Alkalien oder Säuren auf den gewünschten Wert im neutralen pH-Bereich (pH 5 bis pH 9) eingestellt.

Die Anwendung der erfindungsgemäßen Selbstglanzemulsionen erfolgt in der Regel unverdünnt: Die Emulsionen werden auf die Oberfläche aufgetragen und dort mit Hilfe eines weichen Gegenstandes, beispielsweise eines Schwamms oder eines Lappens, gleichmäßig in der gewünschten Menge verteilt. Nach dem Verdunsten des Wassers verbleibt bei diesem Pflegeverfahren ein außerordentlich gleichmäßiger glänzender Pflegefilm.

Ganz besonders bevorzugt ist es hierbei, daß das erfindunggemäße Mittel im wesentlichen frei von fluorhaltigen Benetzungs- und Verlaufshilfsmitteln ist. Man kann also in dieser bevorzugten Ausführungsform auch auf diese Gruppe chemischer Verbindungen verzichten und folglich die ökologische Akzeptanz von erfindungsgemäßen Fußbodenbeschichtungsmitteln noch mehr steigern.

Vorzugsweise ist in dem im erfindungsgemäßen Mittel enthaltenen Emulsionspolymer b) der Anteil der polymerisierten Einheiten ii), welche die vernetzende Funktion liefern, ein solcher, daß, bei erfolgter Vernetzung, die Steigung der Kurve des tan δ gegen die Temperatur des vernetzten Polymers in dem Gummizustands-Plateau einen Wert von 3,00 · 10⁻³ bis -0,20 · 10⁻³ aufweist. Bezüglich der Bedeutung und Bestimmung von tan δ sei an dieser Stelle auf die EP 438 216 A2, Seite 6, Zeile 48, bis Seite 7, Zeile 16, hingewiesen.

Im übrigen gilt für die bevorzugten Merkmale des erfindungsgemäß zu verwendenden Polyurethans das bereits bei den Ausführungen zum erfindungsgemäßen Mittel Gesagte.

### Beispiele

**Tabelle 1: Formulierungen von Bodenbeschichtungsmitteln [alle Anteile in Gew.-%]**

| **Rohstoff** | **Ref.1 %** | **Ref. 2 %** | **Ref.3 %** | **Ref.4 %** | **Ref.5 %** | **Erfindung E1/%** | **Erfindung E2/%** |
|---|---|---|---|---|---|---|---|
| Zn-vernetztes Polyacrylat | 18 | 20 | 19 | 18 | - | - | - |
| Wachsdispersion | 4 | 3 | 3 | 2 | 3 | 3 | 3 |
| Polyurethan-Dispersion auf petrochemischer Basis [Neorez 986^{®}] | - | - | ca. 2 | ca.11 | ca. 5 | - | - |
| Styrol Maleinat | - | 2 | - | - | - | - | - |
| Niotensid: Fettalkohol mit 6-7 EO-Gruppen | - | - | - | - | - | - | 0,5 |
| Fluortensid [Fluorad FL 129] = Ethyl-N-perfluoroctylsulfonylaminoessigsäure-K-Salz | ca. 0,1 | Ca. 0,1 | ca. 0,1 | ca. 0,1 | - | - | - |
| Nicht-Metall-vernetztes Polyacrylat gemäß der EP 438 216 A2 | - | - | - | - | 20 | 20 | 20 |
| Polyurethandispersion auf Basis nachwachsender Rohstoffe gem. der DE 44 38 351 A1 | - | - | - | - | - | ca. 1,5 | 1,5 |
| | Rest auf 100 Gew.-%: Wasser und weitere übliche Stoffe* für Bodenbeschichtungsmittel | | | | | | |

| | | | | | | | |
|---|---|---|---|---|---|---|---|
| *beispielsweise permanente Weichmacher (ggf. Tributoxyethylphosphat), temporäre Weichmacher (wie Ethyldiglykol), Verlaufshilfsmittel (wie nichtionische Tenside oder sonstige Netzmittel) | | | | | | | |

**Tabelle 2: Ergebnisse im anwendungstechnischen Einsatz mit den Referenz-Boden-Beschichtungsmitteln Ref.1 bis Ref. 5 sowie den erfindungsgemäßen Bodenbeschichtungsmitteln E1 und E2**

| | **Prüfparameter** | **Ref.1** | **Ref. 2** | **Ref.3** | **Ref.4** | **Ref.5** | **E1** | **E2** |
|---|---|---|---|---|---|---|---|---|
| A | Strapazierverhalten(Begehverstrichung, Absatzstriche Verkratzungen | 0 | -0,5 | -2 | +0,5 | -1,5 | 0 | 0 |
| B | Verschleiß / Haltbarkeit | 0 | 0 | -1 | 0 | -1 | 0 | 0 |
| C | Netz- / Verlaufsverhalten | 0 | 0 | -0,5 | 0 | -0,5 | 0 | +0,5 |
| D | Wasser- / Wischfestigkeit | 0 | 0 | 0 | -0,5 | 0 | 0 | 0 |
| E | Wiederentfernbarkeit | 0 | 0 | 0,5 | -2 | 0 | 0 | 0 |
| F | High Speed Polierverhalten | 0 | +0,5 | +1 | -1 | +0,5 | +0,5 | +0,5 |
| G | Flächenanschmutzung | 0 | 0 | -0,5 | 0 | 0 | 0 | 0 |
| H | Wischverhalten des Pflegefilms / Hydrophobie | 0 | -0,5 | 0 | 0 | 0 | 0 | 0 |

Zur Beurteilung der in Tabelle 2 angeführten Kriterien wurden die Bodenbeschichtungsmittel Ref 1 bis Ref 5 und E1 sowie E2 in Mengen von jeweils 10 ml mit Hilfe eines Handauftragegerätes auf sieben 30 x 60 cm großen PVC-Platten gleichmäßig verteilt. Die mit den jeweiligen Bodenbeschichtungsmitteln beschichteten PVC-Platten wurden unter vergleichbaren Bedingungen in der Praxis bei extremer Frequentierung und zwar etwa 3000 Begehungen/Tag über einen Zeitraum von 100 Tagen getestet.

Die Auswertung der Ergebnisse erfolgte durch geschultes Fachpersonal mittels visueller Bewertung der Qualitätskriterien der Bodenbeschichtung. Dabei reichte die Bewertungsskala von +2 (= ausgezeichnet) über 0 (guter Standard in der Praxis) bis hin zu -2 (sehr schlecht). Besonders zu erwähnen ist, daß es Ziel der Entwicklung ist, in allen Bewertungskriterien nahe an 0 oder darüber zu liegen. Dementsprechend ist das Referenzmittel 1, das in Tabelle 2 bei allen Bewertungskritierien mit 0 bewertet wird, zum Zeitpunkt der Erfindung das erfolgreichste Produkt im Markt.

Trotz des geringen Anteils an Polyurethan liegt bei den mit E1 beschichteten PVC-Platten ein Belag vor, der gutes Strapazierverhalten sowie Haltbarkeit und geringe Verschleißanfälligkeit aufweist. Hinzu kommt, daß die Wiederentfernbarkeit des Films ebenfalls gut ist und das Verlaufsverhalten trotz des Fehlens von Fluortensid den Praxisansprüchen genügt. Bei den Versuchen mit E2 zeigte sich sogar beim Netz-/Verlaufsverhalten eine Steigerung bei ansonsten gleichen Werten wie E1.

Überraschenderweise konnte durch die erfindungsgemäße Kombination ohne Verwendung Metall-vernetzter Polymere erstmals eine Bodenbeschichtung erzeugt werden, die in allen relevanten Kriterien die Werte der bisher üblichen Mittel auf Basis Metall-vernetzter Polymere erreichte.

## Patentansprüche

1. Wässriges, polymeres. Fußbodenbeschichtungsmittel, das rezepturgemäß frei von Metallsalzen ist, enthaltend
a) 1 bis 10 Gew.- % Polyurethan-Komponente bezogen auf das gesamte Fußbodenbeschichtungsmittel, bei deren Herstellung eine Polyolmischung, in der als Bestandteil partiell dehydratisiertes Rizinusöl mit einer Hydroxylzahl von 90 bis 130 mg KOH pro g Substanz vorliegt, verwendet wurde, und
b) ein Emulsionspolymer als filmbildende Komponente, die bewirkt, dass eine resultierende Beschichtung durch Einsatz einer Säure oder Lauge abziehbar bzw. entfernbar ist, auf Basis von
i) einem ersten Anteil an polymerisierten Einheiten, die entweder eine Säure- oder eine Aminogruppe enthalten, mit der Wirkung, dass die Teilchen des Emulsionspolymers quellen, wenn sie mit einem Amingruppen-enthaltenden Politurentferner (einschließlich Ammoniak) bzw. einem sauren Politurentferner behandelt werden, und
ii) einem zweiten Anteil an polymerisierten Einheiten, welche eine funktionelle Gruppe enthalten, die eine zwischenmolekulare, kovalente Vernetzung des Polymers ermöglicht, entweder durch direkte Reaktion zwischen diesen vernetzenden Gruppen oder mittels eines kovalent vernetzenden Mittels, welches mit diesen vernetzenden Gruppen reagieren kann und in der Zusammensetzung vorliegt, wobei eine solche zwischenmolekulare kovalente Vernetzung des Polymers entweder vor oder während der Abscheidung des Films auf dem Substrat stattfindet.

2. Mittel nach Anspruch 1, **dadurch gekennzeichnet, dass** bei der Herstellung des Polyurethans a) partiell dehydratisiertes Rizinusöl mit einer Hydroxylzahl von 110 bis 125 mg KOH pro g Substanz eingesetzt wird.

3. Mittel nach einem der Ansprüche 1 oder 2, **dadurch gekennzeichnet, dass** bei der Herstellung des Polyurethans a) das partiell dehydratisierte Rizinusöl einen Anteil von 25 bis 100 Gew.-% bezogen auf die Polyolkomponente des Polyurethans ausmacht.

4. Mittel nach einem der Ansprüche 1 bis 3, **dadurch gekennzeichnet, dass** das Polyurethan a) 1 bis 7 Gew.-%, besonders bevorzugt 1 bis 5 Gew.-%, bezogen auf das gesamte Fußbodenbeschichtungsmittel, ausmacht.

5. Mittel nach einem der Ansprüche 1 bis 4, **dadurch gekennzeichnet, dass** das Emulsionspolymer b) 3 bis 35 Gew.-%, basierend auf dem Gesamtgewicht des Polymers, vorzugsweise 5 bis 30 Gew.-%, an polymerisierten Einheiten, welche eine Säuregruppe, vorzugsweise eine Carbonsäuregruppe, enthalten, mit der Wirkung, dass die Emulsionspolymerteilchen quellen, wenn sie mit einem Amingruppen-enthaltenden Politurentferner (einschließlich Ammoniak) behandelt werden, und 0,15 bis 12 Gew.-% an polymerisierten Einheiten, welche die vernetzende Funktionalität liefern, enthält.

6. Mittel nach einem der Ansprüche 1 bis 4, **dadurch gekennzeichnet, dass** das Emulsionspolymer b) 3 bis 30 Gew.-%, bezogen auf das Gewicht des Polymers, vorzugsweise 5 bis 20 Gew.-%, an polymerisierten Einheiten, welche eine primäre, sekundäre oder tertiäre Aminogruppe aufweisen, mit der Wirkung, dass die resultierenden Emulsionspolymerteilchen quellen, wenn sie mit einem sauren Politurentferner behandelt werden, und 0,2 bis 9,0 Gew.-% an polymerisierten Einheiten, welche die vernetzende Funktionalität liefern, enthält.

7. Mittel nach einem der Ansprüche 1 bis 6, **dadurch gekennzeichnet, dass** die filmbildende Komponente b) 10 bis 40 Gew.-%, vorzugsweise 12 bis 30 Gew.-%, bezogen auf das gesamte Fußbodenbeschichtungsmittel, ausmacht.

8. Mittel nach einem der Ansprüche 1 bis 7, **dadurch gekennzeichnet, dass** bezogen auf das gesamte Fußbodenbeschichtungsmittel, zusätzlich
a) bis zu 3 Gew.-% Wachsdispersion, vorzugsweise auf Polyethylenbasis, und/ oder
b) bis zu 3 Gew.-% Verlaufshilfsmittel, vorzugsweise auf Basis nichtionischer Tenside, und/oder
weitere Hilfs- und Wirkstoffe, wie übliche temporäre Weichmacher, beispielsweise ein- oder mehrwertige Alkohole, übliche permanente Weichmacher, beispielsweise Tributoxyethylphosphat, weitere übliche Zusatzstoffe, beispielsweise Additive oder Konservierungsmittel sowie Wasser enthalten sind.

9. Mittel nach einem der Ansprüche 1 bis 8, **dadurch gekennzeichnet, dass** in dem Emulsionspolymer b) der Anteil der polymerisierten Einheiten ii), welche die vernetzende Funktion liefern, ein solcher ist, dass, bei erfolgter Vernetzung, die Steigung der Kurve des tan δ gegen die Temperatur des vernetzten Polymers in dem Gummizustands-Plateau einen Wert von 3,00 10⁻³ bis-0,20 10⁻³ aufweist.

10. Mittel nach einem der Ansprüche 1 bis 9, **dadurch gekennzeichnet, dass** das Mittel im wesentlichen frei von fluorhaltigen Benetzungs- und Verlaufshilfsmitteln ist.

## Claims

1. An aqueous, polymeric floor coating agent which, according to its formulation, is free of metal salts, containing
a) 1 to 10 wt.% polyurethane component, relative to the overall floor coating agent, in the production of which a polyol mixture has been used wherein partially dehydrated castor oil with a hydroxyl number of 90 to 130 mg KOH per g of substance is present as constituent, and
b) an emulsion polymer as film-forming component, the effect of which is that a resulting coating can be stripped or removed by using an acid or an alkali solution, based on
i) a first amount of polymerized units containing either an acid group or an amino group and having the effect that the particles of the emulsion polymer undergo swelling when treated with an amine group-containing polish remover (including ammonia) or with an acid polish remover, and
ii) a second amount of polymerized units containing a functional group which allows intermolecular, covalent crosslinking of the polymer either by direct reaction between these crosslinking groups or by means of a covalently crosslinking agent that can react with these crosslinking groups and is present in the composition, such intermolecular covalent crosslinking of the polymer taking place either prior to or during deposition of the film on the substrate.

2. The agent according to claim 1, **characterized in that** partially dehydrated castor oil with a hydroxyl number of 110 to 125 mg KOH per g of substance is used in the production of polyurethane a).

3. The agent according to any of claims 1 or 2, **characterized in that** the share of partially dehydrated castor oil used in the production of polyurethane a) is 25 to 100 wt.%, relative to the polyol component of the polyurethane.

4. The agent according to any of claims 1 to 3, **characterized in that** the polyurethane a) amounts to 1 to 7 wt.%, more preferably 1 to 5 wt.%, relative to the overall floor coating agent.

5. The agent according to any of claims 1 to 4, **characterized in that** the emulsion polymer b) contains 3 to 35 wt.%, based on the total weight of the polymer, preferably 5 to 30 wt.%, of polymerized units including an acid group, preferably a carboxylic acid group, with the effect that the emulsion polymer particles undergo swelling when treated with an amine group-containing polish remover (including ammonia), and 0.15 to 12 wt.% of polymerized units providing said crosslinking functionality.

6. The agent according to any of claims 1 to 4, **characterized in that** the emulsion polymer b) contains 3 to 30 wt.%, relative to the weight of the polymer, preferably 5 to 20 wt.%, of polymerized units having a primary, secondary or tertiary amino group, with the effect that the resulting emulsion polymer particles undergo swelling when treated with an acidic polish remover, and 0.2 to 9.0 wt.% of polymerized units providing said crosslinking functionality.

7. The agent according to any of claims 1 to 6, **characterized in that** the film-forming component b) amounts to 10 to 40 wt.%, preferably 12 to 30 wt.%, relative to the overall floor coating agent.

8. The agent according to any of claims 1 to 7, **characterized in that**, relative to the overall floor coating agent,
a) up to 3 wt.% wax dispersion, preferably based on polyethylene, and/or
b) up to 3 wt.% flow control agents, preferably based on non-ionic surfactants, and/or
further auxiliaries and active agents such as conventional temporary plasticizers, e.g. monohydric or polyhydric alcohols, conventional permanent plasticizers, e.g. tributoxyethyl phosphate, further conventional admixtures, e.g. additives or preservatives, as well as water are additionally included.

9. The agent according to any of claims 1 to 8, **characterized in that** in the emulsion polymer b) the share of polymerized units ii) providing said crosslinking function is such that, after crosslinking has taken place, the slope of the tanδ versus temperature curve of the crosslinked polymer in the rubbery state plateau has a value of 3.00 ·10⁻³ to -0.20 ·10⁻³.

10. The agent according to any of claims 1 to 9, **characterized in that** the agent is essentially free of fluorine-containing wetting agents and flow control agents.

## Revendications

1. Produit aqueux polymère d'enduction des sols, dont la recette est exempte de sels métalliques, contenant
a) 1 à 10 % en poids, rapportés à l'ensemble du produit d'enduction des sols, d'un composant polyuréthane, pour la préparation duquel a été utilisé un mélange de polyols, dans lequel il y avait comme composant de l'huile de ricin partiellement déshydratée avec un indice d'hydroxyle de 90 à 130 mg de KOH par g de substance, et
b) un polymère en émulsion comme composant filmogène, qui fait que l'enduction résultante peut être pelée, respectivement éliminée, par l'emploi d'un acide ou d'une base, sur la base de
i) une première part d'unités polymérisées qui contiennent soit un groupe acide, soit un groupe amine, avec l'effet que les particules du polymère en émulsion gonflent quand elles sont traitées avec un éliminateur de vernis contenant des groupes amines (y compris l'ammoniaque), respectivement avec un éliminateur de vernis acide, et
ii) une deuxième part d'unités polymérisées, lesquelles contiennent un groupe fonctionnel qui permet une réticulation intermoléculaire covalente du polymère, soit par réaction directe entre ces groupes réticulateurs, soit au moyen d'un agent réticulateur qui peut réagir avec ces groupes réticulateurs et qui est présent dans la composition, sachant qu'une telle réticulation covalente intermoléculaire du polymère a lieu soit avant, soit pendant le dépôt du film sur le substrat.

2. Produit selon la revendication 1, **caractérisé en ce que** lors de la préparation du polyuréthane a), de l'huile de ricin partiellement déshydratée avec un indice d'hydroxyle de 110 à 125 mg de KOH par g de substance est utilisée.

3. Produit selon l'une quelconque des revendications 1 ou 2, **caractérisé en ce que** lors de la préparation du polyuréthane a), l'huile de ricin partiellement déshydratée représente une proportion de 25 à 100 % en poids, rapportée à la composante polyol du polyuréthane.

4. Produit selon l'une quelconque des revendications 1 à 3, **caractérisé en ce que** le polyuréthane a) représente 1 à 7 % en poids, de façon particulièrement préférée 1 à 5 % en poids, rapportés à l'ensemble du produit d'enduction des sols.

5. Produit selon l'une quelconque des revendications 1 à 4, **caractérisé en ce que** le polymère en émulsion b) contient 3 à 35 % en poids, basés sur le poids total du polymère, de préférence 5 à 30 % en poids, d'unités polymérisées, lesquelles contiennent un groupe acide, de préférence un groupe d'acide carboxylique, avec l'effet que les particules de polymère en émulsion gonflent quand elles sont traitées avec un éliminateur de vernis contenant des groupes amines (y compris l'ammoniac), et 0,15 à 12 % en poids d'unités polymérisées qui délivrent la fonctionnalité de réticulation.

6. Produit selon l'une quelconque des revendications 1 à 4, **caractérisé en ce que** le polymère en émulsion b) contient 3 à 30 % en poids, rapportés au poids du polymère, de préférence 5 à 20 % en poids d'unités polymérisées, lesquelles comportent un groupe amine primaire, secondaire ou tertiaire, avec l'effet que les particules de polymère en émulsion résultantes gonflent quand elles sont traitées avec un éliminateur de vernis acide, et 0,2 à 9,0 % en poids d'unités polymérisées qui délivrent la fonctionnalité de réticulation.

7. Produit selon l'une quelconque des revendications 1 à 6, **caractérisé en ce que** le composant filmogène b) représente 10 à 40 % en poids, de préférence 12 à 30 % en poids, rapportés à l'ensemble du produit d'enduction des sols.

8. Produit selon l'une quelconque des revendications 1 à 7, **caractérisé en ce que**, rapportés à l'ensemble du produit d'enduction des sols,
a) jusqu'à 3 % en poids de dispersion de cire, de préférence à base de polyéthylène et/ou
b) jusqu'à 3 % en poids d'auxiliaire d'étalement, de préférence sur la base de tensioactifs non ioniques et/ou
d'autres agents auxiliaires et d'autres agents actifs, tels des assouplissants temporaires habituels, par exemple des alcools mono- ou polyvalents, des assouplissants permanents habituels, par exemple du phosphate de tributoxyéthyle, d'autres substances supplémentaires habituelles, par exemple des additifs ou des agents de conservation, ainsi que de l'eau, y sont contenus en plus.

9. Produit selon l'une quelconque des revendications 1 à 8, **caractérisé en ce que** dans le polymère en émulsion b), la part des unités polymérisées ii) qui délivrent la fonction de réticulation est telle que, une fois la réticulation accomplie, la pente de la courbe tan en fonction de la température du polymère réticulé présente dans le plateau d'état caoutchouteux une valeur de 3,00 · 10⁻³ à -0,20 · 10⁻³.

10. Produit selon l'une quelconque des revendications 1 à 9, **caractérisé en ce que** le produit est essentiellement exempt d'agents auxiliaires fluorés de mouillage et d'étalement.
